# FASCICULE DE BREVET EUROPEEN

(11) **EP 3 807 698 B1**
(45) Date de publication et mention de la délivrance du brevet: **13.07.2022**
(21) Numéro de dépôt: 19728092.8
(22) Date de dépôt: 06.06.2019
(51) Int. Cl.: G02B 27/01, G02B 5/02

(54) **APPAREIL DE PROJECTION DESTINÉ À UN SYSTÈME D'AFFICHAGE TÊTE HAUTE POUR CONDUCTEUR DE VÉHICULE AUTOMOBILE ET SYSTÈME CORRESPONDANT**
PROJEKTIONSVORRICHTUNG FÜR EIN HEAD-UP-ANZEIGESYSTEM FÜR EINEN KRAFTFAHRZEUGFAHRER UND ENTSPRECHENDES SYSTEM
PROJECTING APPARATUS INTENDED FOR A HEAD-UP DISPLAY SYSTEM FOR A MOTOR-VEHICLE DRIVER AND CORRESPONDING SYSTEM

(30) Priorité: 13.06.2018 FR 1855197
(43) Date de publication de la demande: 21.04.2021
(73) Titulaire: Valeo Comfort and Driving Assistance, 94046 Créteil Cedex (FR)
(72) Inventeur: GRANDCLERC, François, 94046 Créteil Cedex (FR); MERMILLOD, Pierre, 94046 Créteil Cedex (FR); PETRUCCI, Antoine-Camille, 94046 Créteil Cedex (FR)
(74) Mandataire: Delplanque, Arnaud
(86) Numéro de dépôt international: PCT/EP2019/064868
(87) Numéro de publication internationale: WO 2019/238539

(56) Documents cités:
- EP-A1- 2 919 059
- EP-A1- 3 064 995
- WO-A1-2015/159029
- US-A1- 2015 168 795

## Description

### DOMAINE TECHNIQUE AUQUEL SE RAPPORTE L'INVENTION

La présente invention concerne de manière générale le domaine des aides à la conduite de véhicules motorisés. Elle concerne plus particulièrement un appareil de projection destiné à un système d'affichage tête haute pour conducteur de véhicule automobile ainsi qu'un système correspondant.

### ARRIERE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un système d'affichage tête haute, encore dit de vision haute, permettant un affichage tête-haute, adapté à projeter des informations (vitesse du véhicule, direction à suivre, ...) à la hauteur du regard du conducteur afin de l'aider dans sa conduite. A cette fin, un appareil de projection de ces informations est mis en œuvre au sein du système d'affichage tête haute.

Cet appareil de projection comporte principalement un dispositif de génération d'un faisceau lumineux et un écran imageur. En général, un miroir de repliement est utilisé pour renvoyer les images produites par l'appareil de projection vers une lame partiellement réfléchissante disposée à la hauteur du regard du conducteur en situation de conduite. Le miroir de repliement peut être intégré à l'appareil de projection.

Un problème rencontré avec les systèmes connu est la difficulté d'obtenir une illumination uniforme des informations projetées. En outre, il faut également éviter les réflexions parasites de sources lumineuses externes sur des éléments optiques du système d'affichage tête haute et en particulier de son appareil de projection. Parmi ces sources lumineuses externes, le soleil, sous certaines inclinaisons, peut venir se refléter sur des éléments optiques de l'appareil de projection et gêner le conducteur et la lecture des informations projetées. Par exemple, on peut citer WO 2015/159029 comme tel appareil de projection.

La présente invention permet de résoudre ces problèmes en proposant des dispositions particulières des éléments optiques de l'appareil de projection.

### OBJET DE L'INVENTION

On propose donc, selon l'invention, un appareil de projection comportant, au moins :
- un dispositif de génération d'un faisceau lumineux d'éclairage de direction principale déterminée,
- un moyen de diffusion de la lumière du faisceau lumineux d'éclairage généré par le dispositif de génération en un faisceau lumineux diffusé, et
- un écran imageur plan comportant deux faces opposées, une face d'entrée recevant le faisceau lumineux diffusé et une face de sortie opposée produisant un faisceau lumineux d'affichage de direction principale déterminée,
le moyen de diffusion de la lumière étant constitué d'un diffuseur plan disposé entre la sortie du dispositif de génération et l'écran imageur.

Selon l'invention, le diffuseur est parallèle à l'écran imageur, le diffuseur et l'écran imageur sont inclinés par rapport à la direction principale du faisceau lumineux d'éclairage généré par le dispositif de génération, et le diffuseur a une indicatrice optique de diffusion présentant un maximum pour une direction alignée avec la direction principale du faisceau lumineux d'éclairage généré par le dispositif de génération.

L'indicatrice optique de diffusion étant alignée avec la direction principale du faisceau lumineux d'éclairage, l'efficacité optique du système est optimisée, tandis que le diffuseur et l'écran imageur peuvent quant à eux être inclinés et parallèles (voir plaqués l'un contre l'autre), ce qui permet d'éviter la visualisation d'images parasites dans l'image virtuelle produite par le système d'affichage tête haute.

On comprend que dans le cadre de l'invention, les termes amont, aval ou entrée, sortie ou leurs équivalents, indiquant le positionnement des différents moyens optiques le long du chemin lumineux sont essentiellement déterminés en relation avec le sens de propagation de la lumière le long du chemin lumineux depuis une source lumineuse du dispositif de génération d'un faisceau lumineux vers le conducteur.

D'autres caractéristiques non limitatives et avantageuses de l'appareil conforme à l'invention, prises individuellement ou selon toutes les combinaisons techniquement possibles, sont les suivantes :
- le diffuseur est plan et comporte des faces principales opposées planes et parallèles entre elles,
- l'écran imageur est plan et comporte des faces principales opposées planes et parallèles entre elles,
- l'écran imageur est du genre transmissif,
- le diffuseur est en matière plastique moulée ou injectée,
- le diffuseur est en matière plastique choisie parmi le polyacrylate, le polycarbonate,
- le diffuseur est appliqué contre la face d'entrée l'écran imageur,
- le diffuseur est appliqué contre la face d'entrée de l'écran imageur par l'intermédiaire d'un bloc de matière d'épaisseur uniforme, le bloc de matière étant pris en sandwich entre le diffuseur et l'écran imageur,
- le bloc de matière est choisi parmi des blocs de matière homogène ou non homogène,
- le bloc de matière est constitué d'une matière plastique transparente homogène,
- le bloc de matière est constitué d'un réseau de fibres optiques parallèles entre elles et perpendiculaires aux deux faces parallèles du bloc afin de former un guide optique collimateur,
- le dispositif de génération d'un faisceau lumineux d'éclairage comporte un réflecteur constitué d'un conduit creux et intérieurement réfléchissant,
- le réflecteur comporte une extrémité amont côté d'une source lumineuse et une extrémité aval opposée à la précédente,
- le réflecteur forme en sortie du dispositif de génération d'un faisceau lumineux d'éclairage un faisceau lumineux d'éclairage de divergence réduite par rapport à la direction principale du faisceau lumineux d'éclairage, ladite divergence étant comprise entre 0° et 20° bornes comprises,
- de préférence, la divergence est comprise entre 0° et 12,5° bornes comprises,
- le diffuseur est disposé contre l'extrémité aval du réflecteur,
- l'écran imageur a une forme circulaire, carrée ou rectangulaire,
- le diffuseur a une forme identique à la forme de l'écran imageur,
- le diffuseur a une forme circulaire, carrée ou rectangulaire,
- le réflecteur a une forme en section transversale qui est identique à la forme de l'écran imageur,
- le réflecteur a une forme en section transversale qui est circulaire, carrée ou rectangulaire,
- le réflecteur est métallique et forme un radiateur thermique du dispositif de génération d'un faisceau lumineux d'éclairage,
- le diffuseur et l'écran imageur sont inclinés d'un angle compris entre 5° et 30° par rapport à une normale à la direction principale du faisceau lumineux d'éclairage,
- le diffuseur et l'écran imageur sont inclinés d'un angle compris entre 10° et 20° par rapport à une normale à la direction principale du faisceau lumineux d'éclairage,
- le diffuseur et l'écran imageur sont inclinés d'un angle d'environ 12,5° par rapport à une normale à la direction principale du faisceau lumineux d'éclairage,
- le diffuseur et l'écran imageur sont inclinés d'un angle d'environ 10° par rapport à une normale à la direction principale du faisceau lumineux d'éclairage dans le cas où la lame partiellement réfléchissante est un parebrise,
- le diffuseur et l'écran imageur sont inclinés d'un angle d'environ 20° par rapport à une normale à la direction principale du faisceau lumineux d'éclairage dans le cas où la lame partiellement réfléchissante est un combineur,
- l'appareil de projection comporte en outre un miroir de repliement de sortie en aval de l'écran imageur, c'est-à-dire côté face de sortie de l'écran imageur,
- le miroir de repliement de sortie est plan,
- le miroir de repliement de sortie est non plan,
- le miroir de repliement de sortie est de forme libre,
- l'appareil comporte en outre un miroir de repliement intermédiaire entre la sortie du réflecteur et le diffuseur afin de changer la direction du faisceau lumineux entre le dispositif de génération d'un faisceau lumineux d'éclairage et le diffuseur,
- le miroir de repliement intermédiaire est plan,
- le miroir de repliement intermédiaire est non plan,
- le miroir de repliement intermédiaire est de forme libre,
- l'appareil de projection comporte un miroir de repliement intermédiaire et un miroir de repliement de sortie,
- dans le cas où un miroir de repliement intermédiaire est disposé dans l'appareil de projection, le miroir de repliement de sortie est omis,
- le véhicule est choisi parmi : une automobile, un camion, un bus ou un autocar.

L'invention concerne également un système de vision haute d'un affichage lumineux pour un conducteur d'un véhicule, ledit système comportant un appareil de projection d'un faisceau lumineux d'affichage selon l'invention et un système optique conçu pour projeter le faisceau lumineux d'affichage en direction d'une lame partiellement réfléchissante.

En d'autres termes, il s'agit d'un système d'affichage tête haute comprenant un appareil de projection selon l'invention, une lame partiellement réfléchissante et un système optique conçu pour transmettre le faisceau lumineux d'affichage en direction de la lame partiellement réfléchissante.

D'autres caractéristiques non limitatives et avantageuses du système conforme à l'invention, prises individuellement ou selon toutes les combinaisons techniquement possibles, sont les suivantes :
- le système de d'affichage tête haute comporte en outre un miroir de repliement de sortie en aval de l'écran imageur de l'appareil de projection,
- l'appareil de projection comporte en outre un miroir de repliement de sortie, le miroir de repliement de sortie réfléchissant le chemin lumineux vers la lame partiellement réfléchissante d'affichage du système,
- dans le système, la lame partiellement réfléchissante d'affichage est une plaque partiellement réfléchissante dédiée au système d'affichage tête haute et rapportée dans le véhicule ou, alors, est le parebrise du véhicule,
- dans le système, la lame partiellement réfléchissante d'affichage est teintée ou opaque,
- dans le système, le parebrise comporte dans la zone formant la lame partiellement réfléchissante un traitement destiné à éviter les images fantômes.

### DESCRIPTION DETAILLEE D'UN EXEMPLE DE REALISATION

La description qui va suivre en regard du dessin annexé, donné à titre d'exemple non limitatif, fera bien comprendre en quoi consiste l'invention et comment elle peut être réalisée.

Sur le dessin annexé :
- la figure 1 représente une vue schématique d'un appareil de projection selon l'invention et destiné à un système d'affichage tête haute pour conducteur de véhicule, et
- la figure 2 représente une vue schématique d'un système d'affichage tête haute comportant un appareil de projection selon l'invention.

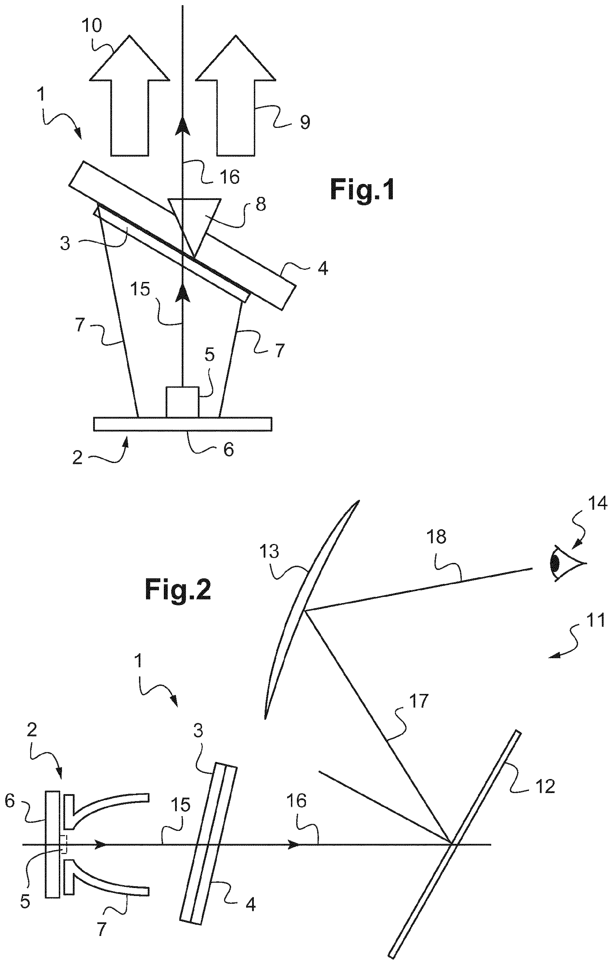

Sur la figure 1, on a représenté un appareil de projection 1 permettant de projeter un faisceau lumineux représentant une image et qui comporte le long d'un chemin lumineux, d'amont vers l'aval : un dispositif de génération 2 d'un faisceau lumineux d'éclairage ayant une direction principale 15, un diffuseur 3 produisant un faisceau lumineux diffusé et un écran imageur 4 produisant un faisceau lumineux d'affichage ayant une direction principale 16. Le diffuseur 3 et l'écran imageur 4 sont des éléments plans parallèles entre eux et de préférence accolés entre eux. On peut cependant prévoir que le diffuseur 3 et l'écran imageur 4 soient séparés par un espace rempli de matière transparente, notamment par bloc d'épaisseur uniforme/constante fait d'une de matière homogène ou non et par exemple d'une matière plastique transparente homogène ou comportant un réseau de fibres optiques parallèles entre elles et perpendiculaires aux deux faces parallèles du bloc afin de former un guide optique collimateur. Le bloc est alors pris en sandwich entre le diffuseur et l'écran imageur qui sont toujours parallèles entre eux.

L'écran imageur 4 permet la formation des images qui sont destinées à être projetées. L'écran imageur 4 ne dévie pas le faisceau lumineux qui le traverse : la direction principale du faisceau lumineux traversant l'écran imageur incliné reste pratiquement inchangée et à tout le moins parallèle entre l'entrée et la sortie de l'écran imageur. En effet, l'écran imageur a des faces d'entrée/amont et de sortie/aval planes et parallèle et si on considère pour simplifier que c'est un milieu homogène (ou une succession de tels milieux) alors, du fait de l'inclinaison de l'écran imageur et donc de ses interfaces optiques par paire produisant des réfractions se compensant, un léger décalage/translation des rayons lumineux non perpendiculaires aux interfaces se produit. L'écran imageur 4 comporte donc deux faces opposées, une face d'entrée recevant le faisceau lumineux diffusé et une face de sortie opposée produisant le faisceau lumineux d'affichage. L'écran imageur 4 est de tout type transmissif et par exemple à cristaux liquides (ou LCD pour "Liquid Crystal Display"), passif ou actif, et de préférence de type à transistors en couche mince (ou TFT pour "Thin-Film Transistor").

Le dispositif de génération 2 d'un faisceau lumineux d'éclairage comporte au moins une diode électroluminescente 5 d'éclairage installée sur un circuit imprimé 6 et un réflecteur 7. Plus généralement, la source lumineuse peut être formée par une pluralité de diodes électroluminescentes portées par le circuit imprimé 6 ou par une seule diode électroluminescente de puissance adaptée. Le réflecteur 7 forme un guide lumineux intérieurement réfléchissant destiné à produire, par réflexion d'une partie au moins des rayons lumineux produits par la source lumineuse 5, un faisceau lumineux d'éclairage de direction principale 15 déterminée et sensiblement collimaté à divergence relativement réduite. Dans une variante, le guide lumineux est intérieurement non réfléchissant. Le dispositif de génération 2 permet donc de générer un faisceau lumineux d'éclairage dont la direction principale 15 est déterminée et est sensiblement perpendiculaire au circuit imprimé 6 sur la figure 1, l'axe principal du cône d'émission de la/des diodes électroluminescentes 5 d'éclairage étant perpendiculaire au circuit imprimé 6. L'axe principal 15 du faisceau lumineux d'éclairage est donc vertical sur le schéma de la figure 1.

Le diffuseur 3 et l'écran imageur 4 sont inclinés par rapport à la direction principale 15 du faisceau lumineux d'éclairage (par exemple d'un angle compris entre 5° et 30°, ici 12, 5°), c'est-à-dire que la direction principale 15 du faisceau lumineux d'éclairage ne vient pas frapper perpendiculairement la face d'entrée du diffuseur : il existe un angle d'incidence non nul (par rapport à la normale au plan du diffuseur). En fait l'inclinaison peut dépendre de la façon dont la lame partiellement réfléchissante 13 est réalisée : dans le cas où c'est le parebrise, on choisit un angle d'environ 10° et dans le cas où c'est un combineur dédié, on choisit un angle d'environ 20°. On rappelle que cet angle est l'angle que font le diffuseur 3 et l'écran imageur 4 par rapport à une normale à la direction principale 15 du faisceau lumineux d'éclairage.

De préférence, le diffuseur 3 est positionné contre l'extrémité aval du réflecteur 7 et cette extrémité aval présente donc une ouverture inclinée, ledit réflecteur 7 ayant une forme générale en tronc de cône à sommet étroit amont, côté circuit imprimé 6 et base large aval inclinée (non perpendiculaire) par rapport à l'axe principal dudit réflecteur. Cette base large aval du réflecteur 7, qui est ouverte, s'applique sur toute sa périphérie contre le diffuseur 3. Du fait que le diffuseur 3 est ainsi positionné contre l'extrémité aval du réflecteur 7, la zone interne du réflecteur 7 qui se situe entre, en amont, le circuit imprimé 6 et la/les diodes électroluminescentes 5 et, en aval, le diffuseur 3, est sensiblement isolée de l'environnement, ce qui évite que des poussières ou autres salissures puissent s'y introduire.

Dans des variantes, la forme du réflecteur 7 est adaptée pour uniformiser la répartition de la lumière sur la face d'entrée, amont, du diffuseur 3. Le réflecteur 7 peut former un radiateur thermique destiné à rayonner/éliminer la chaleur produite par la/les diodes électroluminescentes 5 du dispositif de génération 2 d'un faisceau lumineux d'éclairage.

Le diffuseur 3 est un moyen de diffusion de la lumière du faisceau lumineux d'éclairage généré par le dispositif de génération 2. Le diffuseur est une plaque translucide comprenant une face d'entrée et une face de sortie, et étant conçue pour diffuser par la face de sortie la lumière incidente sur la face d'entrée conformément à l'indicatrice optique de diffusion déjà mentionnée. La face d'entrée du diffuseur 3 (ou plaque translucide) est tournée vers la source lumineuse 5 ; la face de sortie du diffuseur 3 (ou plaque translucide) est tournée vers la face d'entrée de l'écran imageur 4 (et ici plaquée au contact de la face d'entrée de l'écran imageur 4).

Le diffuseur 2 produit en sortie un faisceau lumineux diffusé de direction principale déterminée fonction notamment de l'indicatrice optique de diffusion 8 du diffuseur. Cette indicatrice optique de diffusion 8 définit l'intensité lumineuse en fonction de l'angle d'observation en sortie du diffuseur 3. L'indicatrice de diffusion présente donc un maximum pour une direction qui correspond à la direction principale 16 du faisceau diffusé. Dans le cadre de l'invention, l'indicatrice optique de diffusion 8 est définie de sorte que la direction principale du faisceau lumineux diffusé (sortant du diffuseur) est inclinée par rapport à la normale au plan du diffuseur 3 (ou plaque translucide).

Afin d'obtenir une indicatrice de diffusion présentant un maximum pour une direction inclinée par rapport à la direction normale au plan du diffuseur 3, une face du diffuseur 3 est pourvue d'éléments optiques diffractifs (ou DOE pour "Diffractive Optical Elements").

De tels éléments optiques diffractifs comprennent par exemple un réseau de micro-lentilles et/ou un réseau de prismes.

Les caractéristiques structurelles de ces éléments optiques diffractifs (par exemple la forme et la diamètre des micro-lentilles et/ou l'angle au sommet et la longueur du motif de base pour les prismes) sont déterminées de manière à obtenir l'indicatrice optique souhaitée, laquelle présente un maximum pour une direction inclinée par rapport à la direction normale au plan du diffuseur 3 comme déjà indiqué.

Le diffuseur 3 pourvu des éléments optiques diffractifs peut être réalisé en matière plastique (par exemple en polycarbonate ou en polyméthcrylate de méthyle), par exemple par moulage par compression.

Pour ce faire, on utilise un moule aux dimensions souhaitées du diffuseur et présentant sur une face des motifs correspondant aux éléments optiques diffractifs susmentionnés. La matière plastique est injectée dans le moule et une pression est appliquée afin d'imprimer les motifs du moule dans la matière plastique, ce qui permet d'obtenir les éléments optiques diffractifs.

En variante, on pourrait utiliser un diffuseur holographique permettant d'obtenir une diffusion conforme à l'indicatrice optique de diffusion susmentionnée.

Comme visible sur la figure 1, l'indicatrice optique de diffusion du diffuseur 3 présente ainsi un maximum pour une direction alignée avec la direction principale 15 du faisceau lumineux d'éclairage et est donc telle que la direction principale 16 du faisceau diffusé est parallèle à la direction principale 15 du faisceau lumineux d'éclairage.

Le type de diffusion de la lumière réalisé par le diffuseur peut être choisi parmi les diffusions : linéaire, circulaire, circulaire gaussienne, elliptique ou autre. Le diffuseur peut être en matière plastique, par exemple moulée notamment par injection.

On peut définir une indicatrice optique globale 10 de l'appareil de projection 1 dans la globalité des éléments le composant (dispositif de génération 2, diffuseur 3 et écran imageur 4) et cette indicatrice optique a un maximum pour une direction principale déterminée par rapport, par exemple, au plan du circuit imprimé 6. Sur la figure 1, l'indicatrice optique globale 10 a un maximum pour une direction perpendiculaire au plan du circuit imprimé 6.

On peut également définir une indicatrice optique cible 9 que l'on souhaite obtenir et qui correspond à une valeur adaptée au système d'afficheur tête haute dans lequel l'appareil de projection doit être installé. On choisira donc une indicatrice optique de diffusion 8 donnant dans l'appareil de projection 1 une indicatrice optique globale 10 correspondant à l'indicatrice optique cible 9 souhaitée.

Sur la figure 2, on a représenté un système 11 d'affichage tête haute destiné à équiper un véhicule, par exemple un véhicule automobile de type voiture.

Ce système d'affichage tête haute comprend l'appareil de projection 1 d'images piloté par un calculateur (non représenté) et un système optique de projection essentiellement constitué d'un miroir de repliement de sortie 12 et d'une lame partiellement réfléchissante 13 destinés à projeter des images vers un conducteur 14 du véhicule le long de l'axe de projection de l'image 17 entre le miroir de repliement de sortie 12 et la lame partiellement réfléchissante 13 puis le long de l'axe de projection de l'image 18 entre la lame partiellement réfléchissante 13 et le conducteur 14. La lame partiellement réfléchissante 13 peut être un élément spécifique dédié ou correspondre au parebrise du véhicule. On comprend que sur la figure 2, le faisceau lumineux représenté est symbolisé par des axes qui sont les directions principales dudit faisceau lumineux, le faisceau en lui-même ayant une section transversale pouvant être circulaire ou carrée ou rectangulaire, voir autre, selon les cas.

Du fait que le diffuseur 3 et l'écran imageur 4 sont accolés dans l'appareil de projection 2, l'installation et le réglage de ces éléments sont simplifiés. De plus, on évite les réflexions parasites éventuelles qui pourraient se produire sur les interfaces optiques de ces éléments s'ils étaient séparés ou surtout inclinés entre eux. Le fait que l'écran imageur 4 ne soit pas perpendiculaire aux faisceaux lumineux d'éclairage et d'affichage permet d'éviter les réflexions parasites et en particulier du soleil. Grâce à cela, un éventuel reflet du soleil ne sera pas renvoyé dans le champ de vision du conducteur mais passera en dehors du miroir de repliement de sortie 12.

Comme le montre la figure 2, l'écran imageur 4 permet, sous le contrôle du calculateur (non représenté), de générer une image qui est projetée dans le champ de vision du conducteur 14 lorsque la direction du regard de ce dernier sera tournée vers la voie de circulation et la lame partiellement réfléchissante 13 qui se trouve dans cette même direction du regard. Ce système d'affichage tête haute 11 est plus précisément conçu pour projeter une image virtuelle dans le champ de vision du conducteur du véhicule.

Le système d'affichage tête haute 11 comporte donc à cet effet le miroir de repliement de sortie 12 et la lame partiellement réfléchissante 13, cette dernière étant placée dans le champ de vision du conducteur 14 du véhicule. Le système pourrait éventuellement aussi comporter une lentille/dioptre de grossissement (non représenté). De préférence, le miroir de repliement de sortie 12 est incorporé à l'appareil de projection 1 mais, dans des variantes, il peut être indépendant.

La lame partiellement réfléchissante 13 est de préférence un combineur disposé dans l'habitacle du véhicule automobile, entre le pare-brise du véhicule et les yeux du conducteur 14. En variante, la lame partiellement réfléchissante 13 pourrait être formée par le pare-brise lui-même.

La lame partiellement réfléchissante 13 de la figure 2 comporte une vitre optique courbe partiellement réfléchissante réalisant ici une fonction de grandissement. Il peut s'agir d'une pièce injectée en polycarbonate, qui est incurvée de manière à agrandir la taille de l'image vue par le conducteur 14.

Le calculateur (non représenté) préparant les images destinées à être projetées comprend typiquement un processeur et une unité de mémorisation, par exemple une mémoire dont une mémoire non-volatile réinscriptible ou un disque dur.

Le système d'affichage tête haute 11 représenté permet l'affichage d'images en deux dimensions mais, dans des variantes de réalisation, on peut compléter le système d'affichage tête haute avec notamment un filtre auto-stéréoscopique en sortie de l'écran imageur 4 afin de permettre l'affichage d'images en quasi trois dimensions par un effet visuel de profondeur pour le conducteur, les images projetées semblant apparaitre sur des plans différents pour le conducteur 14.

Dans diverses modalités de réalisation, on prévoit la mise en œuvre de moyens d'agrandissement des images projetées par l'écran imageur notamment avec le moyen décrit ci-dessus et/ou la mise en œuvre d'une lentille ou d'un dioptre de grandissement sur le trajet de l'image projetée. On peut aussi prévoir des moyens de correction de forme d'image, par logiciel et/ou par des moyens matériels, par exemple avec un/des miroirs de repliement non plan(s) et/ou au moins une lentille/dioptre additionnelle ayant des surfaces adaptées pour tenir compte du fait que l'image peut être projetée sur une surface courbe sur laquelle elle est rendue visible. On peut en outre ajouter une grille antidiffusante par exemple en aval de l'écran imageur 4 et/ou en amont du diffuseur 3.

## Revendications

1. Appareil de projection (1) comportant au moins :
- un dispositif de génération (2) d'un faisceau lumineux d'éclairage de direction principale déterminée (15),
- un moyen de diffusion de la lumière du faisceau lumineux d'éclairage généré par le dispositif de génération (2) en un faisceau lumineux diffusé, et
- un écran imageur (4) plan comportant deux faces opposées, une face d'entrée recevant le faisceau lumineux diffusé et une face de sortie opposée produisant un faisceau lumineux d'affichage de direction principale (16) déterminée,
le moyen de diffusion de la lumière étant constitué d'un diffuseur (3) plan disposé entre la sortie du dispositif de génération (2) et l'écran imageur (4),
**caractérisé en ce que** :
- le diffuseur (3) est parallèle à l'écran imageur (4), **en ce que**
- le diffuseur (3) et l'écran imageur (4) sont inclinés par rapport à la direction principale (15) du faisceau lumineux d'éclairage généré par le dispositif de génération (2), et **en ce que**
- le diffuseur (3) a une indicatrice optique de diffusion présentant un maximum pour une direction alignée avec la direction principale (15) du faisceau lumineux d'éclairage généré par le dispositif de génération (2).

2. Appareil de projection (1) selon la revendication 1, **caractérisé en ce que** le diffuseur (3) est appliqué contre la face d'entrée l'écran imageur (4).

3. Appareil de projection (1) selon la revendication 1, **caractérisé en ce que** le diffuseur (3) est appliqué contre la face d'entrée de l'écran imageur (4) par l'intermédiaire d'un bloc de matière d'épaisseur uniforme, le bloc de matière étant pris en sandwich entre le diffuseur (3) et l'écran imageur (4).

4. Appareil de projection (1) selon la revendication 3, **caractérisé en ce que** le bloc de matière est choisi parmi des blocs de matière homogène ou non homogène.

5. Appareil de projection (1) selon l'une quelconque des revendications précédentes, **caractérisé en ce que** le dispositif de génération (2) d'un faisceau lumineux d'éclairage comporte un réflecteur (7) constitué d'un conduit creux et intérieurement réfléchissant.

6. Appareil de projection (1) selon la revendication 5, **caractérisé en ce que** le diffuseur (3) est disposé contre l'extrémité aval du réflecteur (7).

7. Appareil de projection (1) selon la revendication 5 ou la revendication 6, **caractérisé en ce que** le réflecteur (7) est métallique et forme un radiateur thermique du dispositif de génération (2) d'un faisceau lumineux d'éclairage.

8. Appareil de projection (1) selon l'une quelconque des revendications précédentes, **caractérisé en ce que** le diffuseur (3) et l'écran imageur (4) sont inclinés d'un angle compris entre 5° et 30° par rapport à une normale à la direction principale (15) du faisceau lumineux d'éclairage.

9. Système d'affichage tête haute comprenant un appareil de projection selon l'une des revendications 1 à 8, une lame partiellement réfléchissante (13) et un système optique (12) conçu pour transmettre le faisceau lumineux d'affichage en direction de la lame partiellement réfléchissante (13).

10. Système d'affichage tête haute selon la revendication 9, dans lequel la lame partiellement réfléchissante est un pare-brise et dans lequel le diffuseur et l'écran imageur sont inclinés d'un angle d'environ 10° par rapport à une normale à la direction principale du faisceau lumineux d'éclairage (15).

11. Système d'affichage tête haute selon la revendication 9, dans lequel la lame partiellement réfléchissante est un combineur et dans lequel le diffuseur et l'écran imageur sont inclinés d'un angle d'environ 20° par rapport à une normale à la direction principale du faisceau lumineux d'éclairage (15).

## Patentansprüche

1. Projektionseinrichtung (1) aufweisend wenigstens:
- eine Vorrichtung zur Erzeugung (2) eines Beleuchtungslichtbündels mit bestimmter Hauptrichtung (15),
- ein Mittel zur Streuung des Lichts des Beleuchtungslichtbündels, das von der Erzeugungsvorrichtung (2) erzeugt wird, zu einem gestreuten Lichtbündel, und
- einen planen Abbildungsschirm (4), der zwei gegenüberliegende Flächen aufweist, wobei eine Eintrittsfläche das gestreute Lichtbündel aufnimmt und eine gegenüberliegende Austrittsfläche ein Anzeigelichtbündel mit bestimmter Hauptrichtung (16) erzeugt,
wobei das Mittel zur Streuung des Lichts von einem planen Diffusor (3) gebildet ist, der zwischen dem Ausgang der Erzeugungsvorrichtung (2) und dem Abbildungsschirm (4) angeordnet ist,
**dadurch gekennzeichnet, dass**:
- der Diffusor (3) parallel zum Abbildungsschirm (4) verläuft, dadurch, dass
- der Diffusor (3) und der Abbildungsschirm (4) bezogen auf die Hauptrichtung (15) des Beleuchtungslichtbündels, das von der Erzeugungsvorrichtung (2) erzeugt wird, geneigt sind, und dadurch, dass
- der Diffusor (3) einen optischen Streuindikator aufweist, der ein Maximum für eine Richtung aufweist, die mit der Hauptrichtung (15) des Beleuchtungslichtbündels, das von der Erzeugungsvorrichtung (2) erzeugt wird, ausgerichtet ist.

2. Projektionseinrichtung (1) nach Anspruch 1, **dadurch gekennzeichnet, dass** der Diffusor (3) an der Eintrittsfläche des Abbildungsschirms (4) angesetzt ist.

3. Projektionseinrichtung (1) nach Anspruch 1, **dadurch gekennzeichnet, dass** der Diffusor (3) mittels eines Materialblocks gleichmäßiger Dicke an der Eintrittsfläche des Abbildungsschirms (4) angesetzt ist, wobei der Materialblock sandwichartig zwischen dem Diffusor (3) und dem Abbildungsschirm (4) aufgenommen ist.

4. Projektionseinrichtung (1) nach Anspruch 3, **dadurch gekennzeichnet, dass** der Materialblock aus homogenen oder nicht homogenen Materialblöcken gewählt ist.

5. Projektionseinrichtung (1) nach einem der vorhergehenden Ansprüche, **dadurch gekennzeichnet, dass** die Vorrichtung zur Erzeugung (2) eines Beleuchtungslichtbündels einen Reflektor (7) aufweist, der von einer hohlen und innen reflektierenden Leitung gebildet ist.

6. Projektionseinrichtung (1) nach Anspruch 5, **dadurch gekennzeichnet, dass** der Diffusor (3) am stromabwärtigen Ende des Reflektors (7) anliegend angeordnet ist.

7. Projektionseinrichtung (1) nach Anspruch 5 oder 6, **dadurch gekennzeichnet, dass** der Reflektor (7) metallisch ist und einen Wärmeableiter der Vorrichtung zur Erzeugung (2) eines Beleuchtungslichtbündels bildet.

8. Projektionseinrichtung (1) nach einem der vorhergehenden Ansprüche, **dadurch gekennzeichnet, dass** der Diffusor (3) und der Abbildungsschirm (4) um einen Winkel zwischen 5° und 30° bezogen auf eine Normale zur Hauptrichtung (15) des Beleuchtungslichtbündels geneigt sind.

9. Head-Up-Display-System umfassend eine Projektionseinrichtung nach einem der Ansprüche 1 bis 8, eine teilreflektierende Scheibe (13) und ein optisches System (12), das ausgelegt ist, das Anzeigelichtbündel in Richtung der teilreflektierenden Scheibe (13) zu übertragen.

10. Head-Up-Display-System nach Anspruch 9, wobei die teilreflektierende Scheibe eine Windschutzscheibe ist und wobei der Diffusor und der Abbildungsschirm um einen Winkel von ungefähr 10° bezogen auf eine Normale zur Hauptrichtung des Beleuchtungslichtbündels (15) geneigt sind.

11. Head-Up-Display-System nach Anspruch 9, wobei die teilreflektierende Scheibe eine Kombinator ist und wobei der Diffusor und der Abbildungsschirm um einen Winkel von ungefähr 20° bezogen auf eine Normale zur Hauptrichtung des Beleuchtungslichtbündels (15) geneigt sind.

## Claims

1. Projection apparatus (1) comprising at least:
- a device (2) for generating an illuminating light beam with a determined main direction (15),
- a means for scattering the light from the illuminating light beam generated by the generation device (2) into a scattered light beam, and
- a planar imaging screen (4) comprising two opposing faces, an input face receiving the scattered light beam and an opposing output face producing a display light beam with a determined main direction (16),
the light scattering means consisting of a planar diffuser (3) arranged between the output of the generation device (2) and the imaging screen (4), **characterized in that**:
- the diffuser (3) is parallel to the imaging screen (4), **in that**
- the diffuser (3) and the imaging screen (4) are inclined with respect to the main direction (15) of the illuminating light beam generated by the generation device (2), and **in that**
- the diffuser (3) has an optical scattering indicatrix having a maximum for a direction aligned with the main direction (15) of the illuminating light beam generated by the generation device (2).

2. Projection apparatus (1) according to Claim 1, **characterized in that** the diffuser (3) is applied against the input face of the imaging screen (4).

3. Projection apparatus (1) according to Claim 1, **characterized in that** the diffuser (3) is applied against the input face of the imaging screen (4) by way of a block of material of uniform thickness, the block of material being sandwiched between the diffuser (3) and the imaging screen (4).

4. Projection apparatus (1) according to Claim 3, **characterized in that** the block of material is chosen from among blocks of homogeneous or non-homogeneous material.

5. Projection apparatus (1) according to any one of the preceding claims, **characterized in that** the device (2) for generating an illuminating light beam comprises a reflector (7) consisting of a hollow and internally reflective duct.

6. Projection apparatus (1) according to Claim 5, **characterized in that** the diffuser (3) is arranged against the downstream end of the reflector (7).

7. Projection apparatus (1) according to Claim 5 or Claim 6, **characterized in that** the reflector (7) is metallic and forms a thermal radiator of the device (2) for generating an illuminating light beam.

8. Projection apparatus (1) according to any one of the preceding claims, **characterized in that** the diffuser (3) and the imaging screen (4) are inclined at an angle of between 5° and 30° with respect to a normal to the main direction (15) of the illuminating light beam.

9. Head-up display system comprising a projection apparatus according to one of Claims 1 to 8, a partially reflective plate (13) and an optical system (12) designed to transmit the display light beam in the direction of the partially reflective plate (13).

10. Head-up display system according to Claim 9, wherein the partially reflective plate is a windshield and wherein the diffuser and the imaging screen are inclined at an angle of approximately 10° with respect to a normal to the main direction of the illuminating light beam (15) .

11. Head-up display system according to Claim 9, wherein the partially reflective plate is a combiner and wherein the diffuser and the imaging screen are inclined at an angle of approximately 20° with respect to a normal to the main direction of the illuminating light beam (15).
